# EUROPEAN PATENT APPLICATION

(11) **EP 1 892 896 A1**
(43) Date of publication of application: **27.02.2008**
(21) Application number: 06291340.5
(22) Date of filing: 21.08.2006
(51) Int. Cl.: H04L 12/56

(54) **Method and apparatus for receiving data units**

(71) Applicant: Alcatel Lucent, 75008 Paris (FR)
(72) Inventor: Peca, Viorel Daniel, 2800 Mechelen (BE)
(74) Representative: Narmon, Gisèle Marie Thérèse

(57) **Abstract**

The present invention relates to a network unit (21) comprising:
- a first physical port (111a) adapted to receive data units bound to a first physical address (MAC@1),
- a second physical port (111b) adapted to receive data units bound to a second physical address (MAC@2),
- a fault detection means (104) adapted to detect a fault condition (121) whereby operation of the first physical port is affected.

A network unit according to the invention is characterized in that the second physical port is adapted, upon presence of the fault condition, to accept data units bound to the first physical address.

A further embodiment is characterized in that the network unit is an access unit for connecting subscribers to a data communication network (31, 32), and further comprises an address resolution means (113b) adapted, upon presence of the fault condition, to resolve a subscriber network address (IP@S1, IP@S2), formerly associated with the first physical address, into the second physical address.

The present invention also relates to a method for receiving data units at a network unit.

## Description

### Technical Field of the Invention

The present invention relates to a network unit adapted to receive data units, and more specifically to a network unit comprising:
- a first physical port adapted to receive data units bound to a first physical address,
- a second physical port adapted to receive data units bound to a second physical address,
- a fault detection means adapted to detect a fault condition whereby operation of said first physical port is affected.

### Technical Background of the Invention

such a network unit is for instance an access unit for connecting subscribers to a data communication network, or a network unit forming part of a network core. Examples of a network unit are a Digital Subscriber Line Access Multiplexer (DSLAM), an Ethernet Bridge, an Internet Protocol (IP) edge or core router, etc.

An example of a physical address (or hardware address) is a Medium Access Control (MAC) address, as opposed to a network address (or logical address), such as an Ipv4 or IPv6 address.

Examples of a data unit (or data packet or data frame) are an Ethernet frame, an IP datagram, etc.

The network unit may implement link and/or equipment redundancy on the network side for safely connecting to some upstream network unit.

There are typically 1:1 (or 1+1) and N:1 (or N+1) redundancy schemes. In 1:1 redundancy scheme, a standby redundant link/equipment is adapted to take over the operation of a peer link/equipment whenever normal operation of the peer link/equipment is affected. In N:1 redundancy scheme, a standby redundant link/equipment is adapted to take over the operation of one failing link/equipment out of a plurality of N link/equipment.

Other redundancy schemes are known from the art. For instance, the operation of the network unit may be spread over a plurality of link/equipment that are adapted to take over the operation of one failing link/equipment.

The disclosed network unit is disadvantageous in that, in case of failure of a physical port, or of the link connected thereto, or of the piece of equipment supporting the operation thereof, the taking-over physical port will only accept data units bound to its own physical address, which is unique for each and every physical port. In order to avoid that data units keep on being forwarded to the failing port, gratuitous Address Resolution Protocol (ARP) requests are sent to the upstream router for associating network addresses, formerly associated with the failing port, with the physical address of the newly active port.

This solution is not appropriate to an access unit that forwards user traffic at Layer 2, and that does not expose the subscriber physical addresses to the network (also known as L2+ forwarding model OR IP-aware bridging model). If so, thousands of gratuitous ARP requests (as many as there are subscribers) need to be issued before normal operation can be resumed, that is to say a considerable amount of packets are lost meanwhile. Furthermore, this solution consumes a considerable amount of bandwidth, and is not scalable.

### Summary of the Invention

It is an object of the present invention to propose a more suitable transition algorithm that is especially suited to (yet, that is not restricted to) access units implementing L2+ forwarding model.

### Description of the Main Embodiment

According to the invention, this object is achieved due to the fact that said second physical port is adapted, upon presence of said fault condition, to accept data units bound to said first physical address.

A network unit according to the invention is advantageous in that the amount of lost packets is considerably reduced (yet, a few packets might get lost while the take over is taking place).

### Description of Further Embodiments

A further embodiment of a network unit according to the invention is characterized in that said network unit is an access unit for connecting subscribers to a data communication network,
and in that said network unit further comprises an address resolution means coupled to said fault detection means, and adapted, upon presence of said fault condition, to resolve a subscriber network address, formerly associated with said first physical address, into said second physical address.

As no or a few packets get lost, the network unit does not need to issue gratuitous ARP requests. Yet, this mode of operation is temporary, and the network unit will answer the new ARP requests, which are issued as the corresponding entries in the upstream router's ARP cache are aging out, with the physical address of the newly active port.

This embodiment is particularly advantageous in that the induced network load is considerably reduced, while allowing the upstream router to update its ARP cache with the new physical address, thereby causing forthcoming data units to be rightly forwarded to the newly active port.

The present invention also relates to a method for receiving data units at a network unit, and comprising the steps of:
- at a first physical port, receiving data units bound to a first physical address,
- detecting a fault condition whereby operation of said first physical port is affected.

A method according to the invention further comprises, upon presence of said fault condition, the step of, at a second physical port operable to receive data units bound to a second physical address, accepting data units bound to said first physical address.

Embodiments of a method according to the invention correspond with the embodiments of a network unit according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

### An Embodiment of the Invention

### Brief Description of the Accompanying Drawings

The above and other objects and features of the invention will become more apparent and the invention itself will be best understood by referring to the following description of an embodiment taken in conjunction with the accompanying drawings wherein:
- fig. 1 represents a data communication system comprising a network unit according to the invention,
- fig. 2 represents with further details this network unit. *A Preferred Embodiment*

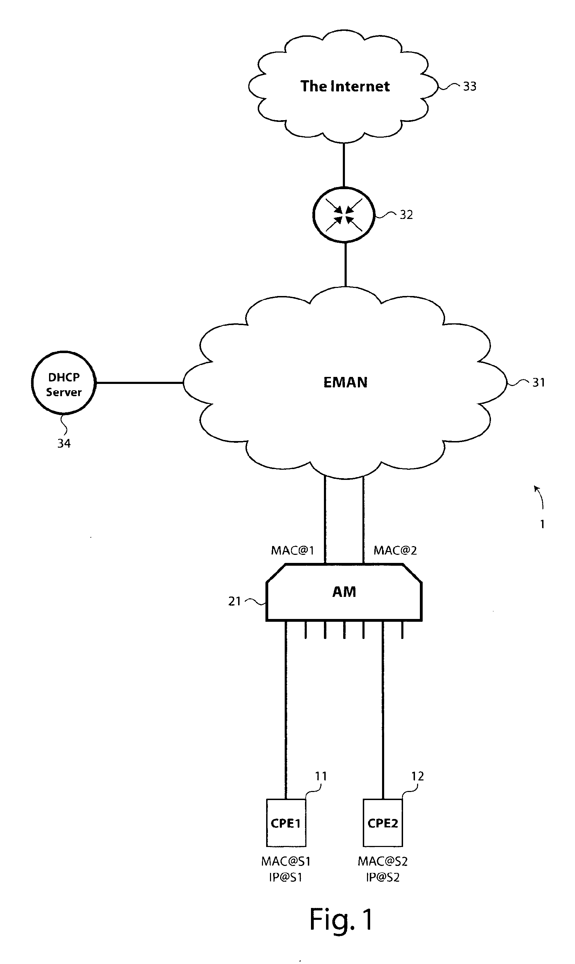

There is seen in fig. 1 an Ethernet-based data communication system 1 comprising:
- Customer Premises Equipment (CPE) 11 (or CPE1) and 12 (or CPE2),
- an access multiplexer 21 (or AM), such as a DSLAM,
- an Ethernet-based Metropolitan Area Network 31 (or EMAN),
- an edge router 32,
- the Internet 33, and
- a Direct Host Configuration Protocol (DHCP) server 34.

CPE 11 and 12 are coupled to the access multiplexer 21 via e.g. local loops, optical fibers, or wireless links. The access multiplexer 21 is coupled to the EMAN 31 via 1 active and 1 stand-by links. The EMAN 31 is coupled to the Internet via the edge router 32. The DHCP server 34 is coupled to the access multiplexer 21 (that implements a DHCP relay function) via the EMAN 31.

The DHCP server 34 is adapted to dynamically configure subscriber equipment. Presently, CPE 11, having MAC@S1 as MAC address, is dynamically assigned IP@S1 as IP address, and CPE 12, having MAC@S2 as MAC address, is dynamically assigned IP@S2 as IP address.

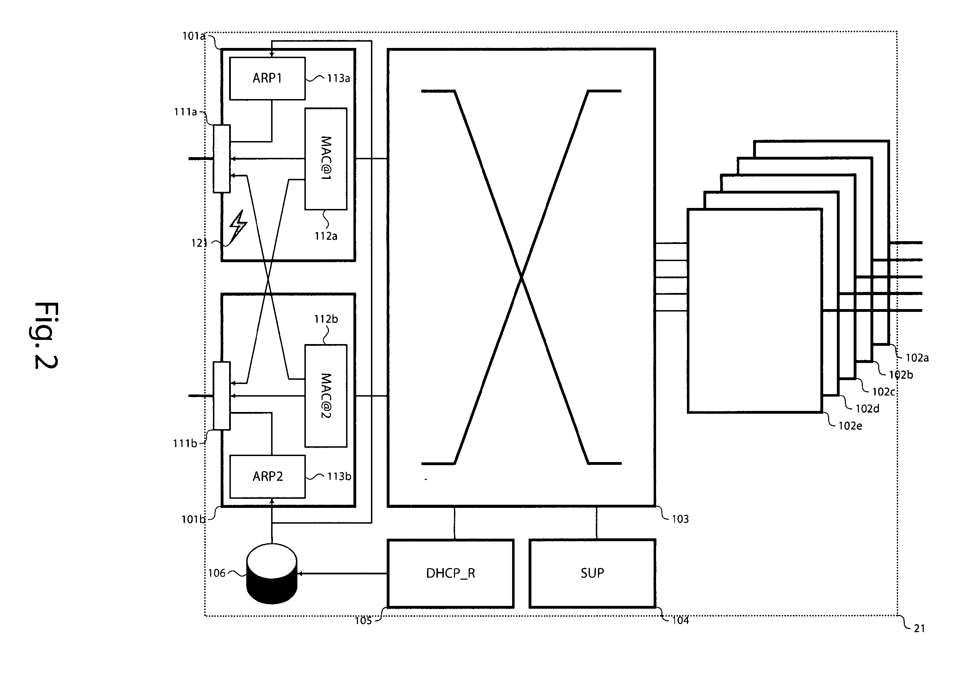

There is seen in fig. 2 further details of the access multiplexer 21.

The access multiplexer 21 comprises:
- network termination cards 101a and 101b for connecting to the EMAN 31,
- line termination cards 102a to 102e for connecting to CPE,
- an Ethernet switch 103,
- a fault supervision unit 104 (or SUP),
- a DHCP relay 105 (or DHCP_R), and
- a central repository 106.

The network termination cards 101, the line termination cards 102, the fault supervision unit 104 and the DHCP relay 105 are coupled to the Ethernet switch 103. The DHCP relay 105 and the network termination cards 101 are further coupled to the central repository 106.

The Ethernet switch 103 is adapted to switch any incoming Ethernet frame from any ingress port towards any egress port by means of a forwarding table (not shown). The Ethernet switch 121 learns which MAC address is associated to which port by decoding the source MAC address of the incoming frames, and populates on the fly the forwarding table with the so-learned associations.

The Ethernet switch 103 is further adapted to forward DHCP traffic towards the DHCP relay 105 for further processing.

The DHCP relay 105 is adapted to relay any DHCP message from a client device to the DHCP server 34, and vice-versa.

The DHCP relay 122 is further adapted to populate in the local repository 106 the association between a publicly assigned IP address and the corresponding subscriber port and MAC address.

The fault supervision unit 104 is adapted to monitor the correct operation of the access multiplexer 21. For instance, the fault supervision unit 104 is adapted to detect a fault condition whereby the operation of a physical port is affected, being on account of a link failure or a degradation of the link quality, or on account of a failure or mis-behavior of the piece of equipment supporting that physical port.

The network termination cards 101a and 101b act in active/stand-by mode (1:1 redundancy scheme).

The network termination cards 101a, respectively 101b, further comprises:
- a physical port 111a, respectively 111b,
- a non-volatile memory 112a, respectively 112b, wherein the MAC address of the corresponding physical port is held, and
- an address resolution means 113a (or ARP1), respectively 113b (or ARP2).

The physical port 111a is coupled to the address resolution means 113a, and to the memory areas 112a and 112b. The physical port 111b is coupled to the address resolution means 113b, and to the memory areas 112b and 112a. The address resolution means 113a and 113b are coupled to the central repository 106.

The physical port 111a is assigned a MAC address MAC@1, and as such is adapted to receive Ethernet frames bound to the MAC address MAC@1. The physical port 111b is assigned a MAC address MAC@2, and as such is adapted to receive Ethernet frames bound to the MAC address MAC@2.

The address resolution means 113 are adapted to answer the ARP requests issued by the edge router 32 for resolving a subscriber IP address into a physical address. The address resolution means 113 either address directly the central repository 106, or make use of a local replica of the aforementioned associations held in the central repository 106.

An operation of the preferred embodiment follows.

Initially, CPE 11 (more specifically, a DHCP client housed by CPE 11) initiates a DHCP session to obtain network configuration parameters from a DHCP server. The network configuration parameters includes a public IP address, primary and secondary Domain Name server's (DNS) IP addresses, gateway's IP address, subnet mask, etc. The DHCP session is initiated by broadcasting a DHCPDISCOVER message (not shown), which DHCP message being relayed by the DHCP relay 105 towards the DHCP server 34. The DHCP session goes on by exchanging further DHCP messages (DHCPOFFER, DHCPREQUEST), and terminates with the DHCP server 34 returning a DHCPACK message to the DHCP client. The DHCPACK message contains a public IP address IP@S1 assigned to CPE 11.

The DHCP relay 105 writes into the local repository 106 this IP address IP@S1 as being associated with the MAC address of CPE 11, presently MAC@S1, and with the port identifier identifying the subscriber port to which CPE 11 is coupled., which pieces of information being recorded upon receipt of the first DHCPDISCOVER message, or of a further DHCP message of the DHCP session.

Similarly, CPE 12 is assigned a public IP address IP@S2, which is held in the local repository 106 as being associated with the MAC address MAC@S2 and the port identifier identifying the subscriber port to which CPE 12 is coupled

Initially, the network termination card 101a is active, and the network termination card 101b is in stand-by mode, ready for taking over the operation of its peer.

Upon receipt of the first IP datagram bound to a particular subscriber IP address, for example IP@S1, the edge router 32 broadcasts downstream an ARP request for resolving this particular IP address into a physical address. This ARP request is received by the access multiplexer 21, more specifically by the active network termination card 101a. The address resolution means 113a thereof identifies this particular IP address as being publicly registered in the local repository 106, and consequently answers the ARP request by associating its own physical address MAC@1 with the subscriber IP address.

The edge router 32 then forwards the IP datagram with MAC@1 as destination MAC address, which MAC address being then substituted with the actual subscriber MAC address, presently MAC@S1, before being further forwarded to the Ethernet switch 103, and further to the subscriber.

At a further moment in time, the fault supervision unit 104 detects a failure 121 that affects the operation of the physical port 111a (for example, a failure of the network termination card 101a as depicted in fig. 2). The fault supervision unit 104 notifies the stand-by network termination card 101b to take over the operation of its peer 101a.

The EMAN 31 implements Spanning Tree Protocol (STP) or Rapid Spanning Tree Protocol (RSTP) that provides network recovery in case of link/equipment failure. Network recovery time range from 30 to 60 seconds for STP, and from 1 to 2 seconds for RTSP. A few frames are lost while the new network topology is being computed to recover from the link/equipment failure.

After network recovery took place, traffic bound to the access multiplexer 21 starts being forwarded over the back-up link connected to the network termination card 101b.

Upon detection and presence of the fault condition 121, the physical port 111b, in addition to receiving Ethernet frames bound to its own physical address, namely MAC@2, starts accepting Ethernet frames bound to the physical address of its peer port, namely MAC@1, which MAC address was initially read from the memory area 112a before the failure took place. By so doing, no gratuitous ARP need to be sent to the edge router 32 to advertise the physical address of the newly active port, namely MAC@2, as being associated to the subscriber IP addresses.

As the entries in the ARP cache of the edge router 32 are aging out, the edge router 32 sends new ARP requests for resolving again the corresponding subscriber IP addresses. The address resolution means 113b answer them by resolving the subscriber IP addresses into the MAC address of its associated physical port, presently MAC@2.

Traffic bound to the subscriber IP addresses, the entry of which within the ARP cache did not expire yet, keep on making use of the former MAC address MAC@1, yet without any further impact since this MAC address is also accepted by the newly active port 111b.

Gradually, the MAC address MAC@2 will substitute for the former MAC address MAC@1 as destination MAC address of the whole downstream traffic bound to the access multiplexer 21.

After a while (in close relationship with the ARP aging timer value that is used in the edge router 32), the network termination card 101b may de-activate the reception by the physical port 111b of the Ethernet frames bound to the peer MAC address MAC@1, and may resume normal operation. By so doing, the traffic processing load incurred by the physical port 111b is set back to its nominal value (i.e., reception of Ethernet frames bound to the MAC address MAC@2 only).

### Alternative Embodiments

In an alternative embodiment of the present invention, the access multiplexer 21 implements N:1 redundancy scheme. A stand-by network termination card is adapted to take over the operation of any of a plurality of network termination cards. After takeover, the physical port of the newly active network termination card accepts Ethernet frames bound to the MAC address of the failing port.

In still an alternative embodiment of the present invention, traffic reception is spread over a plurality of network termination cards, any of which being capable of taking-over the operation of a failing network termination card. One or more remaining active termination cards are then configured to accept Ethernet frames bound to the MAC address of the failing port.

In a further embodiment of the present invention, the fault supervision unit is distributed over the network termination cards 101. Each network termination card monitors the correct operation of its peer, e.g. by exchanging alive messages between each other.

In still a further embodiment of the present invention, the MAC addresses MAC@1 and MAC@2 of the physical ports 111a and 111b are read from a central repository located outside the network termination cards 101, such as a remote inventory area.

The present invention may also find applications for non-Ethernet based networks, such as Asynchronous Transfer Mode (ATM)-based or Multi-Protocol Label Switch (MPLS)-based or Frame Relay (FR)-based networks. As an example, a physical address for an ATM-based or FR-based network would refer to a Data Link Connection Identifier (DLCI), which has local significance only.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A network unit (21) comprising:
- a first physical port (111a) adapted to receive data units bound to a first physical address (MAC@1),
- a second physical port (111b) adapted to receive data units bound to a second physical address (MAC@2),
- a fault detection means (104) adapted to detect a fault condition (121) whereby operation of said first physical port is affected,
***characterized in that*** said second physical port is adapted, upon presence of said fault condition, to accept data units bound to said first physical address.

2. A network unit (21) according to claim 1,
***characterized in that*** said network unit is an access unit (21) for connecting subscribers to a data communication network (31, 32),
*and **in that*** said network unit further comprises an address resolution means (113b) adapted, upon presence of said fault condition, to resolve a subscriber network address (IP@S1, IP@S2), formerly associated with said first physical address, into said second physical address.

3. A method for receiving data units at a network unit, (21) and comprising the steps of:
- at a first physical port (111a), receiving data units bound to a first physical address (MAC@1),
- detecting a fault condition (121) whereby operation of said first physical port is affected,
***characterized in that*** said method further comprises, upon presence of said fault condition, the step of, at a second physical port (111b) operable to receive data units bound to a second physical address (MAC@2), accepting data units bound to said first physical address.

4. A method according to claim 4, ***characterized in that*** said network unit is an access unit (21) for connecting subscribers (USR1, USR2) to a data communication network (31, 32),
*and **in that*** said method further comprises, upon presence of said fault condition, the step of resolving a subscriber network address (IP@S1, IP@S2), formerly associated with said first physical address, into said second physical address.
